# EUROPEAN PATENT APPLICATION

(11) **EP 2 719 750 A1**
(43) Date of publication of application: **16.04.2014**
(21) Application number: 14000068.8
(22) Date of filing: 20.10.2008
(51) Int. Cl.: C10M 107/34, C09K 5/04, C10M 105/18, C10N 30/00, C10N 40/30

(54) **Refrigerator oil and working fluid composition for refrigerating machine**

(30) Priority: 29.10.2007 JP 2007280607
(62) Divisional of application: 08843829.6
(71) Applicant: Nippon Oil Corporation, Tokyo 105-8412 (JP)
(72) Inventor: Shimomura, Yuji, Yokohama-shi Kanagawa, 231-0815 (JP); Takigawa, Katsuya, Yokohama-shi Kanagawa, 231-0815 (JP)
(74) Representative: Grünecker, Kinkeldey, Stockmair & Schwanhäusser

(57) **Abstract**

The present invention relates to a working fluid composition for a refrigerating machine, said composition comprising a polyalkylene glycol and a fluoropropene refrigerant, wherein the polyalkylene glycol has a peroxide number of not greater than 10.0 meq/kg. The invention further relates to a refrigerator oil comprising a polyalkylene glycol and being used together with a fluoropropene refrigerant, wherein the polyalkylene glycol has a peroxide number of not greater than 10.0 meq/kg.

## Description

### Technical Field

The present invention relates to a refrigerator oil and to a working fluid composition for a refrigerating machine.

### Background Art

In light of the problem of ozone layer depletion that is a focus of attention in recent years, the restrictions on CFCs (chlorofluorocarbons) and HCFCs (hydrochlorofluorocarbons) that are used as refrigerants in conventional refrigerating machines have become more stringent, and HFCs (hydrofluorocarbons) are coming into use as substitute refrigerants.

Mineral oils or hydrocarbon oils such as alkylbenzenes have been preferred for use as refrigerator oils when CFCs or HCFCs are the refrigerants, but since changing the refrigerant can cause the refrigerator oil used with it to exhibit unpredictable behavior in terms of its compatibility with the refrigerant, its lubricity, its dissolved viscosity with the refrigerant and its thermal and chemical stability, it has been necessary to develop different refrigerator oils for different refrigerants. Examples of refrigerator oils that have been developed for HFC refrigerants include polyalkylene glycols (see Patent document 1), esters (see Patent document 2), carbonic acid esters (see Patent document 3) and polyvinyl ethers (see Patent document 4).

HFC-134a is an HFC refrigerant that is routinely used as a refrigerant for automobile air conditioners, and while it has an ozone depletion potential (ODP) of zero, its high global warming potential (GWP) has led to its restriction in Europe. It has therefore become an urgent issue to develop refrigerants that can be used as substitutes for HFC-134a.

In light of this background it has been proposed to use, as substitute refrigerants for HFC-134a, fluoropropene refrigerants which have very low ODP and GWP, are nonflammable and are comparable or superior to HFC-134a in terms of their thermodynamic properties, as a measure of refrigerant performance. There has also been proposed the use of refrigerant mixtures of fluoropropene with saturated hydrofluorocarbons, C3-C5 saturated hydrocarbons, dimethyl ether, carbon dioxide, bis(trifluoromethyl)sulfide or trifluoroiodomethane (see Patent document 5).

In addition, there have been proposed refrigerator oils that employ mineral oils, alkylbenzenes, poly α-olefins, polyalkyleneglycols, monoesters, diesters, polyol esters, phthalic acid esters, alkyl ethers, ketones, carbonic acid esters, polyvinyl ethers and the like, as refrigerator oils that can be used with fluoropropene refrigerants or refrigerant mixtures of fluoropropene and saturated hydrofluorocarbons, C3-C5 saturated hydrocarbons, dimethyl ether, carbon dioxide, bis(trifluoromethyl)sulfide or trifluoroiodomethane (see Patent documents 5-7).
[Patent document 1] Japanese Unexamined Patent Publication HEI No. 02-242888
[Patent document 2] Japanese Unexamined Patent Publication HEI No. 03-200895
[Patent document 3] Japanese Unexamined Patent Publication HEI No. 03-217495
[Patent document 4] Japanese Unexamined Patent Publication HEI No. 06-128578
[Patent document 5] International Patent Publication No. WO2006/094303
[Patent document 6] Japanese Patent Public Inspection No. 2006-512426
[Patent document 7] International Patent Publication No. WO2005/103190

### Disclosure of the Invention

### Problems to be Solved by the Invention

In refrigeration systems employing fluoropropene refrigerants, as described in Patent documents 5, 6 and 7, the refrigerator oil employed may be a mineral oil or a hydrocarbon such as an alkylbenzene which is used in CFCs or HCFCs or a polyalkylene glycol, polyol ester or polyvinyl ether which is used in HFCs. Based on research by the present inventors, however, it has not been possible to achieve a high level of refrigerant compatibility simply by applying these conventional refrigerator oils in the systems mentioned above.

The invention has been accomplished in light of these circumstances, and its object is to provide a refrigerator oil and a working fluid composition for a refrigerating machine, that can achieve a high level of refrigerant compatibility in refrigeration systems employing fluoropropene refrigerants.

### Means for Solving the Problems

As a result of much diligent research directed toward achieving the object stated above, the present inventors have found that it is possible to realize a refrigerator oil with sufficient compatibility with refrigerants in the copresence of fluoropropene refrigerants by using a specific polyalkylene glycol, and the invention has been completed upon this finding.

Specifically, the invention provides a working fluid composition for a refrigerating machine comprising a polyalkylene glycol represented by the following formula (1) and a fluoropropene refrigerant,

R₁-(OR₃)ₙ-OR₂ (1)

wherein R₁ and R₂ may be the same or different and each represents hydrogen, a C1-C5 alkyl group or a C2-C5 acyl group, R₃ represents a C2-C4 alkylene group, n represents the number of repeats of the oxyalkylene group represented by OR₃, and the proportion of C2 alkylene groups for all of the R₃ is not greater than 30 % by mole.

The invention further provides a refrigerator oil comprising a polyalkylene glycol represented by formula (1) above, which can be used together with fluoropropene refrigerants.

The working fluid composition for a refrigerating machine of the invention preferably comprises at least one selected from among 1,2,3,3,3-pentafluoropropene (HFC-1225ye), 1,3,3,3-tetrafluoropropene (HFC-1234ze), 2,3,3,3-tetrafluoropropene (HFC-1234yf), 1,2,3,3-tetrafluoropropene (HFC-1234ye) and 3,3,3-trifluoropropene (HFC-1243zf), as a fluoropropene refrigerant.

The working fluid composition for a refrigerating machine of the invention may also comprise at least one fluoropropene refrigerant (hereunder referred to as "refrigerant (A)") alone, or it may further comprise at least one selected from among saturated hydrofluorocarbon, C3-C5 hydrocarbon, dimethyl ether, carbon dioxide, bis(trifluoromethyl)sulfide and trifluoroiodomethane refrigerants (hereunder referred to as "refrigerant (B)").

For a refrigerant mixture comprising refrigerant (A) and refrigerant (B), preferably the fluoropropene refrigerant is at least one selected from among 1,2,3,3,3-pentafluoropropene (HFC-1225ye), 1,3,3,3-tetrafluoropropene (HFC-1234ze), 2,3,3,3-tetrafluoropropene (HFC-1234yf), 1,2,3,3-tetrafluoropropene (HFC-1234ye) and 3,3,3-trifluoropropene (HFC-1243zf), as a fluoropropene refrigerant; the saturated hydrofluorocarbon is preferably one or more selected from among difluoromethane (HFC-32), pentafluoroethane (HFC-125), 1,1,2,2-tetrafluoroethane (HFC-134), 1,1,1,2-tetrafluoroethane (HFC-134a), 1,1-difluoroethane (HFC-152a), fluoroethane (HFC-161), 1,1,1,2,3,3,3-heptafluoropropane (HFC-227ea), 1,1,1,2,3,3-hexafluoropropane (HFC-236ea), 1,1,1,3,3,3-hexafluoropropane (HFC-236fa), 1,1,1,3,3-pentafluoropropane (HFC-245 fa) and 1,1,1,3,3-pentafluorobutane (HFC-365mfc); and the C3-C5 hydrocarbon is preferably at least one selected from among propane, normal-butane, butane, isobutane, 2-methylbutane and normal-pentane.

### Effect of the Invention

According to the invention it is possible to provide a refrigerator oil and a working fluid composition for a refrigerating machine that allows a high level of refrigerant compatibility to be achieved.

### Best Mode for Carrying Out the Invention

Preferred embodiments of the invention will now be described in detail.

The refrigerator oil of the invention comprises a polyalkylene glycol represented by the following formula (1) (hereunder also referred to as "polyalkylene glycol of the invention"), and it can be used together with fluoropropene refrigerants. Also, the working fluid composition for a refrigerating machine of the invention comprises a polyalkylene glycol represented by the following formula (1) and a fluoropropene refrigerant. The working fluid composition for a refrigerating machine according to the invention encompasses any mode which contains a refrigerator oil of the invention and a fluoropropene refrigerant,

R₁-(OR₃)ₙ-OR₂ (1)

wherein R, and R₂ may be the same or different and each represents hydrogen, a C1-C5 alkyl group or a C2-C5 acyl group, R₃ represents a C2-C4 alkylene group, n represents the number of repeats of the oxyalkylene group represented by OR₃, and the proportion of C2 alkylene groups among the R₃ in the molecule is not greater than 30 % by mole.

In formula (1), R₁ and R₂ may be the same or different and each represents hydrogen, a C1-C5 alkyl group or a C2-C5 acyl group. When R₁ and R₂ are each an alkyl group or acyl group, they may be either straight-chain or branched. As specific examples of such alkyl groups there may be mentioned methyl, ethyl, straight-chain or branched propyl, straight-chain or branched butyl and straight-chain or branched pentyl groups; and as specific examples of such acyl groups there may be mentioned acetyl, straight-chain or branched propanoyl, straight-chain or branched butanoyl, straight-chain or branched pentanoyl groups. Of these alkyl and acyl groups, methyl, ethyl, straight-chain or branched propyl, straight-chain or branched butyl, acetyl, straight-chain or branched propanoyl and straight-chain or branched butanoyl groups are preferred; methyl, ethyl and acetyl groups are more preferred; and methyl and acetyl groups are most preferred; from the viewpoint of compatibility with refrigerants. If the alkyl and acyl groups exceed C5, the compositional range exhibiting compatibility with refrigerants will be narrowed, potentially resulting in poor lubrication of a refrigerant compressor or hindered heat exchange of an evaporator. There are no particular restrictions on the hydroxyl value, but it is preferably not greater than 100 mgKOH/g, more preferably not greater than 50 mgKOH/g, even more preferably not greater than 30 mgKOH/g and most preferably not greater than 10 mgKOH/g.

R₃ in formula (1) represents a C2-C4 alkylene group. As specific examples of such alkylene groups there may be mentioned ethylene (-CH₂CH₂-), propylene (-CH(CH₃)CH₂-), trimethylene (-CH₂CH₂CH₂-), butylene (-CH(CH₂CH₃)CH₂-) and tetramethylene (-CH₂CH₂CH₂CH₂-). More preferred among these alkylene groups are ethylene, propylene, butylene and tetramethylene. The proportion of C2 alkylene groups of all the R₃ groups must be not greater than 30 % by mole, preferably not greater than 25 % by mole and more preferably not greater than 20 % by mole. The proportion of C2 alkylene groups is preferably no greater than 30 % by mole because the compatibility with refrigerants will be impaired.

Also in formula (1), n represents the number of repeats (polymerization degree) of the oxyalkylene group represented by OR₃, and the proportion of C2 alkylene groups among the n R₃ groups is not greater than 30 % by mole. The number-average molecular weight of the polyalkylene glycol represented by formula (1) is preferably 500-3000, more preferably 600-2000 and even more preferably 600-1500, and n is preferably a number such that the number-average molecular weight of the polyalkylene glycol satisfies the condition mentioned above. If the number-average molecular weight of the polyalkylene glycol is too low, the lubricity in the presence of fluoropropene refrigerants will be insufficient. If the number-average molecular weight is too high, on the other hand, the compositional range exhibiting compatibility with fluoropropene refrigerants under low temperature conditions will be narrowed, potentially resulting in poor lubrication of a refrigerant compressor or hindered heat exchange of an evaporator. The ratio of the weight-average molecular weight (Mw) and number-average molecular weight (Mn) (Mw/Mn) in the polyalkylene glycol represented by formula (1) is preferably not greater than 1.00-1.20. If Mw/Mn is greater than 1.20, the compatibility with fluoropropene refrigerants and the refrigerator oil will tend to be insufficient.

The polyalkylene glycol of the invention can be synthesized by a method known in the prior art ("Alkylene Oxide Polymers", Shibata, M., Kaibundo, November 20, 1990). For example, addition polymerization may be carried out between one or more specified alkylene oxides and an alcohol (R₁OH: R₁ having the same definition as R₁ in formula (1) above), and the terminal hydroxyl groups are etherified or esterified to obtain a polyalkylene glycol of formula (1) above. When two or more different alkylene oxides are used in the production step described above, the obtained polyalkylene glycol may be either a random copolymer or block copolymer, but it is preferably a block copolymer for more excellent oxidation stability or preferably a random copolymer for a superior cold flow property.

The kinematic viscosity at 100°C of the polyalkylene glycol of the invention is preferably 5-20 mm²/s, more preferably 6-18 mm²/s, even more preferably 7-16 mm²/s, yet more preferably 8-15 mm²/s and most preferably 10-15 mm²/s. If the kinematic viscosity at 100°C is below the lower limit the lubricity in the copresence of refrigerants will be insufficient, and if it is greater than the upper limit, the compositional range exhibiting compatibility with refrigerants will be narrowed, potentially resulting in poor lubrication of a refrigerant compressor or hindered heat exchange of an evaporator. The kinematic viscosity at 40°C of the polyalkylene glycol is preferably 10-200 mm²/s and more preferably 20-150 mm²/s. If the kinematic viscosity at 40°C is less than 10 mm²/s the lubricity and compressor sealability will tend to be reduced, and if it is greater than 200 mm²/s, the compositional range exhibiting compatibility with refrigerants under low temperature conditions will be narrowed, potentially resulting in poor lubrication of a refrigerant compressor or hindered heat exchange of an evaporator.

The pour point of the polyalkylene glycol represented by formula (1) is preferably not higher than -10°C, and more preferably between -20 and -50°C. If a polyalkylene glycol with a pour point of above -10°C is used, the refrigerator oil will tend to solidify more easily in the refrigerant circulation system at low temperature.

In the production steps for the polyalkylene glycol represented by formula (1) above, alkylene oxides such as propylene oxide will sometimes undergo side reaction forming unsaturated groups such as allyl groups in the molecule. When unsaturated groups are formed in the polyalkylene glycol molecule, the thermostability of the polyalkylene glycol itself is lowered and polymers are generated causing formation of sludge, or the resistance to oxidation (antioxidation) tends to be reduced, resulting in production of peroxides. Particularly when peroxides are produced, they decompose and generate carbonyl group-containing compounds, and the carbonyl group-containing compounds generate a sludge that easily causes capillary clogging.

Therefore, the polyalkylene glycol of the invention preferably has a low degree of unsaturation due to unsaturated groups and the like, and more specifically, a degree of unsaturation of not greater than 0.04 meq/g, more preferably not greater than 0.03 meq/g and even more preferably not greater than 0.02 meq/g. The peroxide number is preferably not greater than 10.0 meq/kg, more preferably not greater than 5.0 meq/kg and even more preferably not greater than 1.0 meq/kg. The carbonyl number is preferably not greater than 100 ppm by weight, more preferably not greater than 50 ppm by weight and most preferably not greater than 20 ppm by weight.

The degree of unsaturation, peroxide number and carbonyl number according to the invention are the values measured according to the Standard Methods for the Analysis of Fats, Oils and Related Materials, established by the Japan Oil Chemists' Society. Specifically, the degree of unsaturation according to the invention is the value (meq/g) obtained by reacting Wijs solution (ICl-acetic acid solution) with a sample, allowing the reaction mixture to stand in a dark area, subsequently reducing the excess ICl to iodine, titrating the iodine portion with sodium thiosulfate and calculating the iodine value, and then converting the iodine value to vinyl equivalents; the peroxide number according to the invention is the value (meq/kg) obtained by adding potassium iodide to a sample, titrating the produced free iodine with sodium thiosulfate, and converting the free iodine to milliequivalents with respect to 1 kg of sample; and the carbonyl value according to the invention is the value (ppm by weight) obtained by allowing 2,4-dinitrophenylhydrazine to act on a sample to produce colorable quinoid ion, measuring the absorbance of the sample at 480 nm, and converting it to carbonyl content based on a predetermined calibration curve with cinnamaldehyde as the standard substance.

According to the invention, it is preferred for the reaction temperature to be not higher than 120°C (more preferably not higher than 110°C) during reaction of the propylene oxide, in order to obtain a polyalkylene glycol with a low degree of unsaturation, peroxide number and carbonyl number. When an alkali catalyst is used for the production, the degree of unsaturation can be reduced by removing it using an inorganic adsorbent such as active carbon, activated clay, bentonite, dolomite or aluminosilicate. Increase in the peroxide number or carbonyl number can also be prevented by maximally avoiding contact with oxygen or by adding an antioxidant during production or use of the polyalkylene glycol.

The refrigerator oil of the invention comprises a polyalkylene glycol having the structure described above, and even when the polyalkylene glycol is used alone it exhibits excellent properties including sufficiently high cold flow properties, lubricity and stability, as well as an adequately wide compatibility range with fluoropropene refrigerants, but if necessary other base oils or additives may be added as explained below. The polyalkylene glycol content in the refrigerator oil of the invention is not particularly restricted so long as the excellent properties mentioned above are not impaired, but it is preferably 50 % by weight or greater, more preferably 70 % by weight or greater, even more preferably 80 % by weight or greater and most preferably 90 % by weight or greater, based on the total amount of the refrigerator oil. If the content of the polyalkylene glycol represented by formula (1) is less than 50 % by weight, the performance will tend to be inadequate in terms of refrigerator oil lubricity, refrigerant compatibility or thermal and chemical stability.

There are no particular restrictions on the content of the polyalkylene glycol of the invention in a refrigerator oil of the invention, but in terms of more excellent performance including lubricity, refrigerant compatibility, thermal and chemical stability and electrical insulating properties, the content is preferably at least 50 % by weight, more preferably at least 70 % by weight, even more preferably at least 80 % by weight and most preferably at least 90 % by weight, based on the total amount of the refrigerator oil.

The refrigerator oil of the invention may consist entirely of a polyalkylene glycol of the invention, or it may further contain a base oil other than the polyol ester, and various additives. The working fluid composition for a refrigerating machine of the invention may also further contain a base oil other than the polyalkylene glycol of the invention, and various additives. In the explanation which follows, the contents of the base oils other than polyalkylene glycols of the invention and of the additives are given based on the total amount of the refrigerator oil, and the contents of these components in the refrigerator fluid composition are preferably selected to be within the preferred ranges specified below, based on the total amount of refrigerator oil.

As base oils other than polyalkylene glycols of the invention there may be used hydrocarbon-based oils including mineral oils, olefin polymers, naphthalene compounds, alkylbenzenes and the like, esteric base oils (monoesters, diesters, polyol esters and the like), polyglycols outside of the scope of the invention, and oxygen-containing synthetic oils such as polyvinyl ethers, ketones, polyphenyl ethers, silicones, polysiloxanes and perfluoroethers. Among the aforementioned oxygen-containing synthetic oils there are preferably used polyol esters and polyvinyl ethers.

If necessary, the refrigerator oil of the invention may be used in a form that further contains various additives. In the explanation which follows, the additive contents are given based on the total amount of the refrigerator oil composition, and the contents of these components in the refrigerator fluid composition are preferably selected to be within the preferred ranges specified below, based on the total amount of the refrigerator oil composition.

In order to further enhance the antiwear property and load carrying capacity of the refrigerator oil and working fluid composition for a refrigerating machine of the invention there may be added one or more phosphorus compounds selected from the group consisting of phosphoric acid esters, acidic phosphoric acid esters, thiophosphoric acid esters, acidic phosphoric acid ester amine salts, chlorinated phosphoric acid esters and phosphorous acid esters. These phosphorus compounds are esters of phosphoric acid or phosphorous acid with alkanols or polyether alcohols, or derivatives thereof.

As specific examples of phosphoric acid esters there may be mentioned tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetradecyl phosphate, tripentadecyl phosphate, trihexadecyl phosphate, triheptadecyl phosphate, trioctadecyl phosphate, trioleyl phosphate, triphenyl phosphate, tricresyl phosphate, trixylenyl phosphate, cresyldiphenyl phosphate and xylenyldiphenyl phosphate.

As acidic phosphoric acid esters there may be mentioned monobutyl acid phosphate, monopentyl acid phosphate, monohexyl acid phosphate, monoheptyl acid phosphate, monooctyl acid phosphate, monononyl acid phosphate, monodecyl acid phosphate, monoundecyl acid phosphate, monododecyl acid phosphate, monotridecyl acid phosphate, monotetradecyl acid phosphate, monopentadecyl acid phosphate, monohexadecyl acid phosphate, monoheptadecyl acid phosphate, monooctadecyl acid phosphate, monooleyl acid phosphate, dibutyl acid phosphate, dipentyl acid phosphate, dihexyl acid phosphate, diheptyl acid phosphate, dioctyl acid phosphate, dinonyl acid phosphate, didecyl acid phosphate, diundecyl acid phosphate, didodecyl acid phosphate, ditridecyl acid phosphate, ditetradecyl acid phosphate, dipentadecyl acid phosphate, dihexadecyl acid phosphate, diheptadecyl acid phosphate, dioctadecyl acid phosphate and dioleyl acid phosphate.

As thiophosphoric acid esters there may be mentioned tributyl phosphorothionate, tripentyl phosphorothionate, trihexyl phosphorothionate, triheptyl phosphorothionate, trioctyl phosphorothionate, trinonyl phosphorothionate, tridecyl phosphorothionate, triundecyl phosphorothionate, tridodecyl phosphorothionate, tritridecyl phosphorothionate, tritetradecyl phosphorothionate, tripentadecyl phosphorothionate, trihexadecyl phosphorothionate, triheptadecyl phosphorothionate, trioctadecyl phosphorothionate, trioleyl phosphorothionate, triphenyl phosphorothionate, tricresyl phosphorothionate, trixylenyl phosphorothionate, cresyldiphenyl phosphorothionate and xylenyldiphenyl phosphorothionate.

As amine salts of acidic phosphoric acid esters there may be mentioned salts of acidic phosphoric acid esters with amines such as methylamine, ethylamine, propylamine, butylamine, pentylamine, hexylamine, heptylamine, octylamine, dimethylamine, diethylamine, dipropylamine, dibutylamine, dipentylamine, dihexylamine, diheptylamine, dioctylamine, trimethylamine, triethylamine, tripropylamine, tributylamine, tripentylamine, trihexylamine, triheptylamine and trioctylamine.

As chlorinated phosphoric acid esters there may be mentioned tris(dichloropropyl) phosphate, tris(chloroethyl) phosphate, tris(chlorophenyl) phosphate, and polyoxyalkylene bis[di(chloroalkyl)]phosphate. As phosphorous acid esters there may be mentioned dibutyl phosphite, dipentyl phosphite, dihexyl phosphite, diheptyl phosphite, dioctyl phosphite, dinonyl phosphite, didecyl phosphite, diundecyl phosphite, didodecyl phosphite, dioleyl phosphite, diphenyl phosphite, dicresyl phosphite, tributyl phosphite, tripentyl phosphite, trihexyl phosphite, triheptyl phosphite, trioctyl phosphite, trinonyl phosphite, tridecyl phosphite, triundecyl phosphite, tridodecyl phosphite, trioleyl phosphite, triphenyl phosphite and tricresyl phosphite. Mixtures of the above compounds may also be used.

When the refrigerator oil and working fluid composition for a refrigerating machine of the invention contains such phosphorus compounds, the phosphorus compound content is not particularly restricted but is preferably 0.01-5.0 % by weight and more preferably 0.02-3.0 % by weight based on the total amount of the refrigerator oil (the total amount of the base oil and all of the additives). A phosphorus compound may be used alone, or two or more may be used in combination.

In order to further improve the thermal and chemical stability, the refrigerator oil and working fluid composition for a refrigerating machine of the invention may contain one or more epoxy compounds selected from among phenylglycidyl ether-type epoxy compounds, alkylglycidyl ether-type epoxy compounds, glycidyl ester-type epoxy compounds, allyloxirane compounds, alkyloxirane compounds, alicyclic epoxy compounds, epoxidated fatty acid monoesters and epoxidated vegetable oils.

Specific examples of phenylglycidyl ether-type epoxy compounds include phenyl glycidyl ethers and alkylphenyl glycidyl ethers. The alkylphenyl glycidyl ethers referred to here may have one to three C1-C13 alkyl groups, preferred examples of which include those with one C4-C10 alkyl group such as n-butylphenyl glycidyl ether, i-butylphenyl glycidyl ether, sec-butylphenyl glycidyl ether, tert-butylphenyl glycidyl ether, pentylphenyl glycidyl ether, hexylphenyl glycidyl ether, heptylphenyl glycidyl ether, octylphenyl glycidyl ether, nonylphenyl glycidyl ether and decylphenyl glycidyl ether.

Specific examples of alkyl glycidyl ether-type epoxy compounds include decyl glycidyl ether, undecyl glycidyl ether, dodecyl glycidyl ether, tridecyl glycidyl ether, tetradecyl glycidyl ether, 2-ethylhexyl glycidyl ether, neopentyl glycol diglycidyl ether, trimethylolpropanetriglycidyl ether, pentaerythritoltetraglycidyl ether, 1,6-hexanediol diglycidyl ether, sorbitolpolyglycidyl ether, polyalkyleneglycol monoglycidyl ether and polyalkyleneglycol diglycidyl ether.

As specific examples of glycidyl ester-type epoxy compounds there may be mentioned phenylglycidyl esters, alkylglycidyl esters and alkenylglycidyl esters, among which preferred examples include glycidyl-2,2-dimethyl octanoate, glycidyl benzoate, glycidyl acrylate and glycidyl methacrylate.

Specific examples of allyloxirane compounds include 1,2-epoxystyrene and alkyl-1,2-epoxystyrenes.

Specific examples of alkyloxirane compounds include 1,2-epoxybutane, 1,2-epoxypentane, 1,2-epoxyhexane, 1,2-epoxyheptane, 1,2-epoxyoctane, 1,2-epoxynonane, 1,2-epoxydecane, 1,2-epoxyundecane, 1,2-epoxydodecane, 1,2-epoxytridecane, 1,2-epoxytetradecane, 1,2-epoxypentadecane, 1,2-epoxyhexadecane, 1,2-epoxyheptadecane, 1,2-epoxyoctadecane, 1,2-epoxynonadecane and 1,2-epoxyeicosane.

Specific examples of alicyclic epoxy compounds include 1,2-epoxycyclohexane, 1,2-epoxycyclopentane, 3,4-epoxycyclohexylmethyl-3,4-epoxycyclohexane carboxylate, bis(3,4-epoxycyclohexylmethyl)adipate, exo-2,3-epoxynorbornane, bis(3,4-epoxy-6-methylcyclohexylmethyl)adipate, 2-(7-oxabicyclo[4.1.0]hept-3-yl)-spiro(1,3-dioxane-5,3'-[7]oxabicyclo[4.1.0]heptane, 4-(1'-methylepoxyethyl)-1,2-epoxy-2-methylcyclohexane and 4-epoxyethyl-1,2-epoxycyclohexane.

Specific examples of epoxidated fatty acid monoesters include epoxidated esters of C12-C20 fatty acids and C1-C8 alcohols or phenols or alkylphenols. Most preferably used are butyl, hexyl, benzyl, cyclohexyl, methoxyethyl, octyl, phenyl and butylphenyl esters of epoxystearic acid.

Specific examples of epoxidated vegetable oils include epoxy compounds of vegetable oils such as soybean oil, linseed oil and cottonseed oil.

Preferred among these epoxy compounds are phenylglycidyl ether-type epoxy compounds, glycidyl ester-type epoxy compounds, alicyclic epoxy compounds and epoxidated fatty acid monoesters. More preferred among these are phenylglycidyl ether-type epoxy compounds and glycidyl ester-type epoxy compounds, and especially preferred among these are phenyl glycidyl ether, butylphenyl glycidyl ether, alkylglycidyl ester or mixtures thereof.

When the refrigerator oil and working fluid composition for a refrigerating machine according to the invention contains such epoxy compounds, the epoxy compound content is not particularly restricted but is preferably 0.1-5.0 % by weight and more preferably 0.2-2.0 % by weight based on the total amount of the refrigerator oil. A epoxy compound may be used alone, or two or more may be used in combination.

Conventionally known refrigerator oil additives may be included as necessary, in order to further increase the performance of the refrigerator oil and working fluid composition for a refrigerating machine according to the invention. As examples of such additives there may be mentioned phenol-based antioxidants such as di-tert-butyl-p-cresol and bisphenol A, amine-based antioxidants such as phenyl-α-naphthylamine and N,N-di(2-naphthyl)-p-phenylenediamine, anti-wear agents such as zinc dithiophosphate, extreme-pressure agents such as chlorinated paraffins and sulfur compounds, oiliness agents such as fatty acids, silicone-based and other types of antifoaming agents, metal inactivating agents such as benzotriazoles, viscosity index improvers, pour point depressants, detergent dispersants and the like. Such additives may be used alone or in combinations of two or more. There are no particular restrictions on the content of such additives, but it is preferably not greater than 10 % by weight and more preferably not greater than 5 % by weight based on the total amount of the refrigerator oil.

The kinematic viscosity of the refrigerator oil of the invention is not particularly restricted, but the kinematic viscosity at 40°C is preferably 3-1000 mm²/s, more preferably 4-500 mm²/s and most preferably 5-400 mm²/s. The kinematic viscosity at 100°C is preferably 1-100 mm²/s and more preferably 2-50 mm²/s.

The moisture content of the refrigerator oil of the invention is not particularly restricted but is preferably not greater than 500 ppm, more preferably not greater than 300 ppm and most preferably not greater than 200 ppm, based on the total amount of the refrigerator oil. A lower moisture content is desired from the viewpoint of effect on the thermal and chemical stability and electrical insulating properties of the refrigerator oil, especially for use in hermetic type refrigerating machines.

The acid value of the refrigerator oil of the invention is also not particularly restricted, but in order to prevent corrosion of metals used in the refrigerating machine or pipings, and in order to prevent decomposition of the ester in the refrigerator oil of the invention, it is preferably not greater than 0.1 mgKOH/g and more preferably not greater than 0.05 mgKOH/g. According to the invention, the acid value is the value measured based on JIS K2501, "Petroleum products and lubricants-Determination of neutralization number".

The ash content of the refrigerator oil of the invention is not particularly restricted, but in order to increase the thermal and chemical stability of the refrigerator oil of the invention and inhibit generation of sludge and the like, it is preferably not greater than 100 ppm and more preferably not greater than 50 ppm. According to the invention, the ash content is the value measured based on JIS K2272, "Crude oil and petroleum products-Determination of ash and sulfates ash".

The refrigerator oil of the invention is used together with a fluoropropene refrigerant, and the working fluid composition for a refrigerating machine of the invention comprises a fluoropropene refrigerant.

Preferred fluoropropene refrigerants are fluoropropenes with 3-5 fluorine atoms, among which one or mixtures of two or more from among 1,2,3,3,3-pentafluoropropene (HFC-1225ye), 1,3,3,3-tetrafluoropropene (HFC-1234ze), 2,3,3,3-tetrafluoropropene (HFC-1234yf), 1,2,3,3-tetrafluoropropene (HFC-1234ye) and 3,3,3-trifluoropropene (HFC-1243zf) are preferred. From the viewpoint of refrigerant properties, it is preferred to use one or more selected from among HFC-1225ye, HFC-1234ze and HFC-1234yf.

The refrigerant used for the invention may also be a refrigerant mixture comprising a fluoropropene refrigerant and another refrigerant. As other refrigerants there may be mentioned HFC refrigerants, fluorinated ether-based refrigerants such as perfluoroethers, and natural refrigerants including dimethyl ether, ammonia, hydrocarbons and the like.

As HFC refrigerants there may be mentioned C1-C3 and preferably C1-C2 hydrofluorocarbons. As specific examples there may be mentioned difluoromethane (HFC-32), trifluoromethane (HFC-23), pentafluoroethane (HFC-125), 1,1,2,2-tetrafluoroethane (HFC-134), 1,1,1,2-tetrafluoroethane (HFC-134a), 1,1,1-trifluoroethane (HFC-143a), 1,1-difluoroethane (HFC-152a), fluoroethane (HFC-161), 1,1,1,2,3,3,3-heptafluoropropane (HFC-227ea), 1,1,1,2,3,3-hexafluoropropane (HFC-236ea), 1,1,1,3,3,3-hexafluoropropane (HFC-236fa), 1,1,1,3,3-pentafluoropropane (HFC-245fa), 1,1,1,3,3-pentafluorobutane (HFC-365 mfc), and mixtures of two or more of the foregoing. These refrigerants may be appropriately selected depending on the purpose of use and the required performance, but as preferred examples there may be mentioned HFC-32 alone; HFC-23 alone; HFC-134a alone; HFC-125 alone; HFC-134a/HFC-32 = 60-80 % by weight/40-20 % by weight mixture; HFC-32/HFC-125 = 40-70 % by weight/60-30 % by weight mixture: HFC-125/HFC-143a = 40-60 % by weight/60-40 % by weight mixture; HFC-134a/HFC-32/HFC-125 = 60 % by weight/30 % by weight/10 % by weight mixture; HFC-134a/HFC-32/HFC-125 = 40-70 % by weight/15-35 % by weight/5-40 % by weight mixture; and HFC-125/HFC-134a/HFC-143a = 35-55 % by weight/1-15 % by weight/40-60 % by weight mixture. More specifically, there may be mentioned HFC-134a/HFC-32 = 70/30 % by weight mixture; HFC-32/HFC-125 = 60/40 % by weight mixture; HFC-32/HFC-125 = 50/50 % by weight mixture (R410A); HFC-32/HFC-125 = 45/55 % by weight mixture (R410B); HFC-125/HFC-143a = 50/50 % by weight mixture (R507C); HFC-32/HFC-125/HFC-134a = 30/10/60 % by weight mixture; HFC-32/HFC-125/HFC-134a = 23/25/52 % by weight mixture (R407C); HFC-32/HFC-125/HFC-134a = 25/15/60 % by weight mixture (R407E); and HFC-125/HFC-134a/HFC-143a = 44/4/52 % by weight mixture (R404A).

Among HFC refrigerants, preferred saturated hydrofluorocarbons are one or mixtures of two or more of difluoromethane (HFC-32), pentafluoroethane (HFC-125), 1,1,2,2-tetrafluoroethane (HFC-134), 1,1,1,2-tetrafluoroethane (HFC-134a), 1,1-difluoroethane (HFC-152a), fluoroethane (HFC-161), 1,1,1,2,3,3,3-heptafluoropropane (HFC-227ea), 1,1,1,2,3,3-hexafluoropropane (HFC-236ea), 1,1,1,3,3,3-hexafluoropropane (HFC-236fa), 1,1,1,3,3-pentafluoropropane (HFC-245fa) and 1,1,1,3,3-pentafluorobutane (HFC-365 mfc), while from the viewpoint of physical properties of the refrigerant, HFC-32, HFC-125, HFC-134a, HFC-152a, and mixtures of HFC-32 and HFC-134a are preferred.

As hydrocarbon refrigerants there are preferred C3-C5 hydrocarbons, and as specific examples there may be mentioned methane, ethylene, ethane, propylene, propane, cyclopropane, normal-butane, isobutane, cyclobutane, methylcyclopropane, 2-methylbutane, normal-pentane, and mixtures of two or more of the foregoing. Preferred among these are refrigerants that are gases at 25°C, 1 atmosphere, such as propane, normal-butane, isobutane, 2-methylbutane, and mixtures thereof.

As specific examples of fluorinated ether-based refrigerants there may be mentioned HFE-134p, HFE-245mc, HFE-236mf, HFE-236me, HFE-338mcf, HFE-365mcf, HFE-245mf, HFE-347mmy, HFE-347mcc, HFE-125, HFE-143m, HFE-134m, HFE-227me and the like, and these refrigerants may be appropriately selected depending on the purpose of use and the required performance.

When the refrigerant used for the invention is a refrigerant mixture, the refrigerant mixture preferably contains at least one selected from among fluoropropene refrigerants (hereinafter referred to as "refrigerant (A)") and at least one selected from among saturated hydrofluorocarbon, C3-C5 hydrocarbon, dimethyl ether, carbon dioxide, bis(trifluoromethyl)sulfide and trifluoroiodomethane refrigerants (hereinafter referred to as "refrigerant (B)").

When the refrigerant used for the invention is a refrigerant mixture comprising refrigerant (A) and refrigerant (B), the refrigerant mixture is preferably an azeotropic mixture, but it does not need to be an azeotropic mixture so long as it has the properties required as a refrigerant, and the mixing ratio of both components is preferably 1:99-99:1 and more preferably 5:95-95:5.

Also, when the refrigerant used for the invention is a refrigerant mixture comprising refrigerant (A) and refrigerant (B), the refrigerant mixture may further contain an HFC refrigerant other than the fluoropropene refrigerant or saturated hydrofluorocarbon, a fluorinated ether-based refrigerant such as a perfluoroether, or a natural refrigerant such as a hydrocarbon other than a C3-C5 hydrocarbon, or ammonia.

The refrigerator oil of the invention will normally be present in a refrigerating air conditioner in the form of a refrigerator fluid composition in admixture with a fluoropropene refrigerant or refrigerant mixture as described above. There are no particular restrictions on the mixing proportion of the refrigerator oil and refrigerant in the composition, or on the mixing proportion of the refrigerator oil and refrigerant in the working fluid composition for a refrigerating machine according to the invention, but the refrigerator oil content is preferably 1-500 parts by weight and more preferably 2-400 parts by weight with respect to 100 parts by weight of the refrigerant.

The refrigerator oil and working fluid composition for a refrigerating machine of the invention is preferably used in an air conditioner or refrigerator with a reciprocating or rotating hermetic type compressor, or in an open or hermetic type automobile air conditioner. The refrigerator oil and working fluid composition for a refrigerating machine according to the invention may also be suitably used in cooling devices of dehumidifiers, water heaters, freezers, cold storage/refrigerated warehouses, automatic vending machines, showcases, chemical plants and the like. The refrigerator oil and working fluid composition for a refrigerating machine according to the invention may also be suitably used in devices with centrifugal compressors.

### Examples

The present invention will now be explained in greater detail based on examples and comparative examples, with the understanding that these examples are in no way limitative on the invention.

### [Examples 1-3, Comparative Examples 1-3]

For Examples 1-3 and Comparative Examples 1-3, refrigerator oils were prepared using base oils 1-5 listed below. The properties of the obtained refrigerator oils are shown in Table 1.

### (Base oils)

Base oil 1: Polypropyleneglycol monomethyl ether
Base oil 2: Polyethylenepropyleneglycol monomethyl ether
Base oil 3: Polypropyleneglycol dimethyl ether
Base oil 4: Polyethylenepropyleneglycol dimethyl ether
Base oil 5: Ester of n-heptanoic acid and pentaerythritol
Base oil 6: Naphthene-based mineral oil

Each of the refrigerator oils obtained in Examples 1-3 and Comparative Examples 1-3 was subjected to an evaluation test in the following manner.

### (Refrigerant compatibility evaluation)

Following the procedure outlined in "Refrigerant Compatibility Test Method" under "Refrigerator Oils" of JIS-K-2211, 2 g of refrigerator oil was combined with 18 g of 2,3,3,3-tetrafluoropropene, and it was observed whether the refrigerant and refrigerator oil mutually dissolved at 0°C. The results are shown in Table 1. In Table 1, "compatible" means that the refrigerant and refrigerator oil mutually dissolved, and "separated" means that the refrigerant and refrigerator oil separated into two layers.

### (Thermal and chemical stability evaluation)

Following the procedure outlined in JIS-K-2211, 1 g of a refrigerator oil prepared to a moisture content of not greater than 100 ppm (initial ASTM color: L0.5) and 1 g of 2,3,3,3-tetrafluoropropene were filled into a glass tube together with a catalyst (iron, copper and aluminum wires), and then heated to 150°C and stored for one week for testing. After the test, the ASTM color of the refrigerator oil composition and the change in catalyst color were evaluated. The ASTM color was evaluated according to ASTM D156. The change in catalyst color was determined by visual observation of the outer appearance, and evaluation was made as "no change", "no gloss" or "blackening". The results are shown in Table 1.

**[Table 1]**

| | | | Example 1 | Example 2 | Example 3 | Comp. Example 1 | Comp. Example 2 | Comp. Example 3 |
|---|---|---|---|---|---|---|---|---|
| Base oil No. | | | 1 | 2 | 3 | 4 | 5 | 6 |
| Kinematic viscosity at 40°C (mm²/s) | | | 50.1 | 49.8 | 46.2 | 50.3 | 21.8 | 56.1 |
| Kinematic viscosity at 100°C (mm²/s) | | | 9.8 | 9.8 | 9.5 | 10.5 | 4.7 | 5.9 |
| Proportion of C2 alkylene groups in R₃ (% by mole) | | | 0 | 10 | 0 | 50 | - | - |
| Refrigerant compatibility | | | Compatible | Compatible | Compatible | Separated | Separated | Separated |
| Thermal/chemical stability | ASTM color (ASTM D156) | | L0.5 | L0.5 | L0.5 | L0.5 | L0.5 | L0.5 |
| | Catalyst appearance | Cu | No change | No change | No change | No change | No change | No change |
| | | Fe | No change | No change | No change | No change | No change | No change |
| | | Al | No change | No change | No change | No change | No change | No change |

As seen by the results shown in Table 1, the refrigerator oils of Examples 1-3 exhibited excellent refrigerant compatibility when used together with a fluoropropene refrigerant.

## Claims

1. A working fluid composition for a refrigerating machine, **characterized by** comprising:
a polyalkylene glycol represented by the following formula (1); and a fluoropropene refrigerant,
R₁-(OR₃)ₙ-OR₂ (1)
wherein R₁ and R₂ may be the same or different and each represents hydrogen, a C1-C5 alkyl group or a C2-C5 acyl group, R₃ represents a C2-C4 alkylene group, n represents the number of repeats of the oxyalkylene group represented by OR₃, and the proportion of C2 alkylene groups for all of the R₃ groups is not greater than 30 % by mole, and
wherein the polyalkylene glycol has a peroxide number of not greater than 10.0 meq/kg.

2. The working fluid composition for a refrigerating machine according to claim 1, **characterized by** comprising at least one selected from among 1,2,3,3,3-pentafluoropropene, 1,3,3,3-tetrafluoropropene, 2,3,3,3-tetrafluoropropene, 1,2,3,3-tetrafluoropropene and 3,3,3-trifluoropropene as the fluoropropene refrigerant.

3. The working fluid composition for a refrigerating machine according to claim 1 or 2, **characterized in that** the composition further comprises
at least one selected from among saturated hydrofluorocarbon, propane, isobutane, dimethyl ether, carbon dioxide, bis(trifluoromethyl)sulfide and trifluoroiodomethane refrigerants.

4. The working fluid composition for a refrigerating machine according to claim 3, **characterized in that**
the fluoropropene refrigerant is at least one selected from among 1,2,3,3,3-pentafluoropropene, 1,3,3,3-tetrafluoropropene, 2,3,3,3-tetrafluoropropene, 1,2,3,3-tetrafluoropropene and 3,3,3-trifluoropropene, and
the saturated hydrofluorocarbon is at least one selected from among difluoromethane, pentafluoroethane, 1,1,2,2-tetrafluoroethane, 1,1,1,2-tetrafluoroethane, 1,1-difluoroethane, fluoroethane, 1,1,1,2,3,3,3-heptafluoropropane, 1,1,1,2,3,3-hexafluoropropane, 1,1,1,3,3,3-hexafluoropropane, 1,1,1,3,3-pentafluoropropane and 1,1,1,3,3-pentafluorobutane.

5. The working fluid composition for a refrigerating machine according to claim 1, **characterized in that** the polyalkylene glycol has a carbonyl number of not greater than 100 ppm by weight.

6. The working fluid composition for a refrigerating machine according to claim 1, **characterized in that** the polyalkylene glycol has a degree of unsaturation of not greater than 0.04 meq/g.

7. A refrigerator oil, **characterized by** comprising a polyalkylene glycol represented by the following formula (1), and being used together with a fluoropropene refrigerant,
R₁-(OR₃)ₙ-OR₂ (1)
wherein R₁ and R₂ may be the same or different and each represents hydrogen, a C1-C5 alkyl group or a C2-C5 acyl group, R₃ represents a C2-C4 alkylene group, n represents the number of repeats of the oxyalkylene group represented by OR₃, and the proportion of C2 alkylene groups for all of the R₃ groups is not greater than 30 % by mole, and
wherein the polyalkylene glycol has a peroxide number of not greater than 10.0 meq/kg.
